(19) Europäisches Patentamt

European Patent Office

Office européen des brevets

(11) **EP 0 642 229 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int Cl.⁶: **H04B 1/58**

(21) Anmeldenummer: **94113642.6**

(22) Anmeldetag: **31.08.1994**

(54) **Schaltungsanordnung zur Erzeugung einer variablen Leitungsabschlussimpedanz**

Circuit for generating a variable line termination impedance

Circuit pour produire une impédance de terminaison de ligne variable

(84) Benannte Vertragsstaaten:
**AT CH DE FR GB IT LI NL**

(30) Priorität: **02.09.1993 DE 9313253 U**
**19.10.1993 DE 9315933 U**

(43) Veröffentlichungstag der Anmeldung:
**08.03.1995 Patentblatt 1995/10**

(73) Patentinhaber: **SIEMENS AKTIENGESELLSCHAFT**
**80333 München (DE)**

(72) Erfinder:
• **Wallnberger, Gerald**
  **A-9500 Villach (AT)**
• **Zojer, Herbert**
  **A-9500 Villach (AT)**

(56) Entgegenhaltungen:
**EP-A- 0 163 298          WO-A-87/03440**
**WO-A-88/10539**

## Beschreibung

Die Erfindung betrifft eine Schaltungsanordnung zur Erzeugung einer Leitungsabschlußimpedanz.

In der Fernmeldetechnik werden üblicherweise Endgeräte über analoge Teilnehmer-Anschlußleitungen an spezielle Schnittstellenschaltungen angeschlossen. Eine derartige Schnittstellenschaltung, auch Subscriber Line Interface Circuit (SLIC) genannt, versorgt unter anderem die Teilnehmer-Anschlußleitung mit einer Leitungsspannung und einem Leitungsstrom bei einer bestimmten, vorgegebenen Leitungsabschlußimpedanz. Diese Leitungsabschlußimpedanz ist von Land zu Land verschieden und sollte daher bevorzugt auf einfache Weise einstellbar sein.

Wird die Leitungsabschlußimpedanz in analoger Schaltungstechnik realisiert, so treten praktisch keinerlei Stabilitätsprobleme auf, jedoch ist ein Ändern der Impedanz nur schwer oder mit sehr hohem schaltungstechnischen Aufwand möglich. Dagegen wäre eine rein digitale Lösung aufgrund ihrer Programmierbarkeit hinsichtlich einer einfachen Änderung der Impedanz am günstigsten, jedoch ist eine rein digitale Realisierung aus Stabilitätsgründen nicht möglich. Schließlich besteht noch die Möglichkeit, die Leitungsabschlußimpedanz teils analog, teils digital auszuführen. Aufgrund der Komplexität der Übertragungsfunktion eines derartigen Systems, insbesondere bei höherer Ordnung, ist eine Stabilisierung nur schwer möglich.

Aufgabe der Erfindung ist es, eine Schaltungsanordnung zur Erzeugung einer Leitungsabschlußimpedanz mit hoher Stabilität und geringem schaltungstechnischen Aufwand anzugeben.

Die Aufgabe wird gelöst durch eine Schaltungsanordnung zur Erzeugung einer Leitungsabschlußimpedanz mit einem über einen Zweidraht-Vierdraht-Umsetzer an einer gegebenen Leitung eingangsseitig und ausgangsseitig angeschlossenen, analogen Impedanznetzwerk und mit einem dem analogen Impedanznetzwerk unter Zwischenschaltung einer Analog-Digital-Umsetzeinrichtung und einer Digital-Analog-Umsetzeinrichtung parallel geschalteten digitalen Impedanznetzwerk, wobei der Realteil der mit der Übertragungsfunktion des Zweidraht-Vierdraht-Umsetzers multiplizierten Summe aus der Übertragungsfunktion des analogen Impedanznetzwerkes und aus dem Produkt der Übertragungsfunktionen von Analog-Digital-Umsetzeinrichtung, digitalem Impedanznetzwerk und Digital-Analog-Umsetzeinrichtung größer - 1 ist.

Die Erfindung wird nachfolgend anhand der in den Figuren der Zeichnung dargestellen Ausführungsbeispiele näher erläutert. Es zeigt:

Figur 1 ein allgemeines Ausführungsbeispiel einer erfindungsgemäßen Schaltungsanordnung und

Figur 2 eine spezielle Ausführungsform der Schaltungsanordnung nach Figur 1.

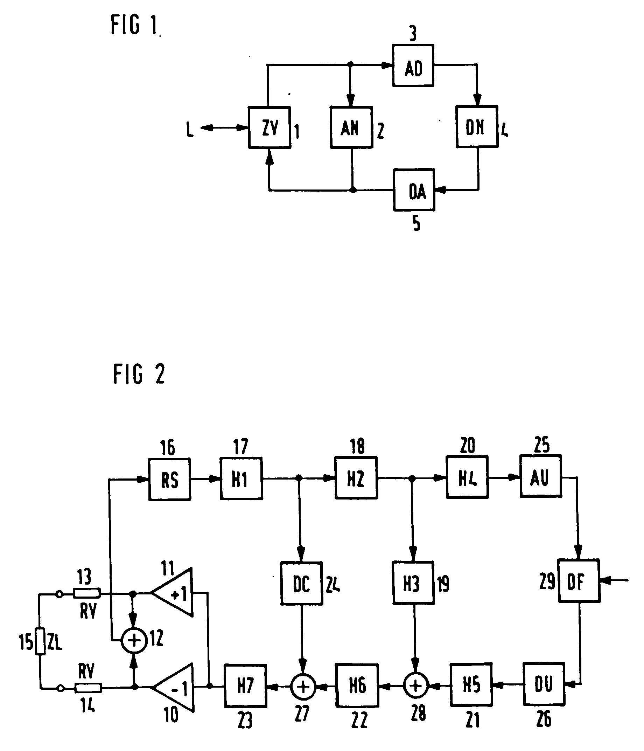

Bei der Schaltungsanordnung nach Figur 1 ist eine Leitung L an einen Zweidraht-Vierdraht-Umsetzer 1 angeschlossen, der auf der Leitung L ankommende Signale in einen Empfangsweg einkoppelt und auf einem Sendeweg ankommende Signale in die Leitung L einspeist. Zwischen Empfangszweig und Sendezweig ist ein analoges Netzwerk 2 eingefügt, dem wiederum unter Zwischenschaltung eines Analog-Digital-Umsetzers 3 sowie eines Digital-Analog-Umsetzer 5 ein digitales Netzwerk 4 parallel geschaltet ist. Die Analog-Digital-Umsetzeinheit 3 und die Digital-Analog-Umsetzeinheit 5 beinhalten dabei neben einem Analog-Digital-Wandler bzw. einem Digital-Analog-Wandler auch analoge und gegebenenfalls digitale Filter zur Bandbegrenzung.

Das Parallelschalten von analoger und digitaler Schleife und damit die Addition der Übertragungsfunktionen von analoger und digitaler Schleife liefert im Frequenzbereich ein dominantes konjugiert komplexes Nullstellenpaar, dessen Lage nur vom Verhältnis der Übertragungsfunktion des analogen Netzwerkes zu der des digitalen Netzwerkes abhängt und das die Stabilität der Schaltung dominant bestimmt. Damit ist mit dem Verhältnis der Übertragungsfunktion des analogen Netzwerkes zu der des digitalen Netzwerkes die Stabilität der Schaltung leicht optimierbar.

Da nach dem geltenden Stabilitätskriterium für Teilnehmer-Anschlußleitungen der Realteil der Leitungsabschlußimpedanz positiv sein muß, ergibt sich als Stablilitätskriterium für die Schaltung nach Figur 1:

$$Re(ZV(AN + AD \times DN \times DA)) > -1.$$

Dabei stehen ZV, AN, AD, DN und DA für die Übertragungsfunktionen des Zweidraht-Vierdraht-Umsetzers 1, des analogen Netzwerkes 2, der Analog-Digital-Umsetzeinheit 3, des digitalen Netzwerkes 4 und der Digital-Analog-Umsetzeinheit 5.

Eine weitere, spezielle Ausführungsform einer erfindungsgemäßen Schaltungsanordnung ist in Figur 2 dargestellt und besteht neben einem Zweidraht-Vierdraht-Umsetzer, einem analogen Netzwerk, einer Analog-Digital-Umsetzeinheit, einem digitalen Netzwerk und einer Digital-Analog-Umsetzeinheit zudem aus einer Einrichtung zur Gleichstromeinspeisung. Der Zweidraht-Vierdraht-Umsetzer besteht dabei aus zwei Verstärkern 10 und 11 mit einer Verstärkung von 1 bzw. -1, deren Eingänge miteinander verschaltet und mit dem Sendeweg gekoppelt sind. Die Ausgänge der beiden Verstärker 10 und 11 sind zum einen auf jeweils einen Eingang eines Addierers 12 geführt und zum anderen über jeweils einen Widerstand 13 bzw. 14, deren Wert jeweils RV beträgt, mit einer Leitung 15, die durch eine Leitungsimpedanz ZL beschrieben werden kann, gekoppelt. Der Ausgang des Addierers 12 ist auf ein analoges Teilnetzwerk 16 geführt, das durch eine Übertragungsfunktion RS beschrieben werden kann und dessen Ausgang den Empfangszweig der Anordnung darstellt. Die Übertragungsfunktion des Zweidraht-Vierdraht-Umsetzers lautet damit:

$$ZV=RS/(2xRV+ZL).$$

Das analoge Netzwerk AN aus Figur 1 soll bei dem Ausführungsbeispiel nach Figur 2 durch folgende Übertragungsfunktion gegeben sein:

$$AN=H1xH7 (DC+H2xH3xH6) .$$

Die Analog-Digital-Umsetzeinheit und Digital-Analog-Umsetzeinheit sollen dabei folgende Übertragungsfunktionen aufweisen:

$$AD=H1xH2xH4xAU$$

und

$$DA=DUxH5xH6xH7.$$

Als digitales Netzwerk ist ein Digitalfilter 29 mit einer Übertragungsfunktion DF vorgesehen. Die Teilübertragungsfunktionen H1 bis H7 werden durch Teilfilter 17 bis 23 gebildet. DC, AU und DU stehen dabei für die Gleichstromeinspeisung 24 bzw. einen Analog-Digital-Wandler 25 bzw. einen Digital-Analog-Wandler 26.
Da die Teilübertragungsfunktionen H1, H2, H6 und H7 sowohl in der analogen als auch in der digitalen Schleife Verwendung finden, und darüber hinaus bei der analogen Schleife die Teilübertragungsfunktionen H1 und H7 sowohl im Gleichstrom als auch im Wechselstrom eingesetzt werden, sind bei entsprechender Schaltungsstruktur sämtliche Teilübertragungsfunktionen nur einmal zu realisieren. Dazu werden die Teilnetzwerke 17, 18, 20, der Analog-Digital-Wandler 25, das digitale Filter 29, der Digital-Analog-Wandler 26 und die Teilnetzwerke 21 bis 23 in Reihe zwischen Empfangsweg und Sendeweg des Zweidraht-Vierdraht-Umsetzers geschaltet. An den Abgriffen zwischen den Teilnetzwerken 17 und 18 bzw. 18 und 20 wird die Gleichrichteinspeisung 24 bzw. das Teilfilter 19 angeschlossen, deren Ausgangssignale unter Zwischenschaltung eines Addierers 27 bzw. 28 am Abgriff zwischen den Teilfiltern H7 und H6 bzw. H6 und H5 wieder eingespeist wird. Als Stabilitätskriterium gilt folglich:

$$RE((RS/(2RV+ZL)) (H1xH7)$$
$$(DC+H2xH6 (H3+H4xAUxDFxDUxH5))) > 1.$$

Patentansprüche

1. Schaltungsanordnung zur Erzeugung einer Leitungsabschlußimpedanz mit einem über einen Zweidraht-Vierdraht-Umsetzer (1) an einer gegebenen Leitung (L) eingangsseitig und ausgangsseitig angeschlossenen, analogen Impedanznetzwerk (2) und mit einem dem analogen Impedanznetzwerk (2) unter Zwischenschaltung einer Analog-Digital-Umsetzeinrichtung (3) und einer Digital-Analog-Umsetzeinrichtung (5) parallel geschalteten digitalen Impedanznetzwerkes (4), wobei der Realteil der mit der Übertragungsfunktion (ZV) des Zweidraht-Vierdraht-Umsetzers (1) multiplizierten Summe aus der Übertragungsfunktion (AN) des analogen Impedanznetzwerkes (2) und aus dem Produkt der Übertragungsfunktionen (AD, DN, DA) von Analog-Digital-Umsetzeinrichtung (3), digitalem Impedanznetzwerk (4) und Digital-Analog-Umsetzeinrichtung (5) größer -1 ist.

Claims

1. Circuit arrangement for generating a line termination impedance with an analogue impedance network (2), which is connected to a given line (L) on the input side and on the output side via a two-wire/four-wire converter (1), and with a digital impedance network (4), which is connected in parallel with the analogue impedance network (2) with the interposition of an analogue-to-digital conversion device (3) and a digital-to-analogue conversion device (5), wherein the real part of the sum of the transfer function (AN) of the analogue impedance network (2) and of the product of the transfer functions (AD, DN, DA) of analogue-to-digital conversion device (3), digital impedance network (4) and digital-to-analogue conversion device (5), which sum is multiplied by the transfer function (ZV) of the two-wire/four-wire converter (1), is greater than -1.

Revendications

1. Circuit pour produire une impédance de terminaison de ligne variable avec un réseau d'impédance (2) analogique, relié du côté entrée et du côté sortie par un convertisseur deux fils-quatre fils (1) à une ligne donnée (L), en insérant entre le convertisseur analogique-numérique (3) et le convertisseur numérique-analogique (5) un réseau d'impédance numérique (4) mis en parallèle, la partie réelle de la fonction de transfert (ZV) du convertisseur deux fils-quatre fils (1) multipliée par la somme de la fonction de transfert (AN) du réseau d'impédance analogique (2) et du produit des fonctions de transfert (AD, DN, DA) du convertisseur analogique-numérique

(3), du réseau d'impédance numérique (4) et du convertisseur numérique-analogique (5) étant supérieure à - 1.

FIG 1

FIG 2